(19) Europäisches Patentamt / European Patent Office / Office européen des brevets

(11) **EP 3 309 748 A1**

(12) **EUROPEAN PATENT APPLICATION**
published in accordance with Art. 153(4) EPC

(43) Date of publication:
**18.04.2018 Bulletin 2018/16**

(51) Int Cl.:
*G06T 7/20* (2017.01)    *G08B 25/00* (2006.01)
*G08B 25/04* (2006.01)    *H04N 7/18* (2006.01)

(21) Application number: **16807456.5**

(22) Date of filing: **07.06.2016**

(86) International application number:
**PCT/JP2016/066856**

(87) International publication number:
**WO 2016/199749 (15.12.2016 Gazette 2016/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.06.2015 JP 2015117556**

(71) Applicant: **Konica Minolta, Inc.**
**Tokyo 100-7015 (JP)**

(72) Inventor: **HORIE, Daisaku**
**Tokyo 100-7015 (JP)**

(74) Representative: **Hoffmann Eitle**
**Patent- und Rechtsanwälte PartmbB**
**Arabellastraße 30**
**81925 München (DE)**

(54) **IMAGE PROCESSING SYSTEM, IMAGE PROCESSING DEVICE, IMAGE PROCESSING METHOD, AND IMAGE PROCESSING PROGRAM**

(57)    An image processing system is provided which can prevent reduction of accuracy in action determination depending on a position in an image of a care receiver. The image processing system (300) includes a human detection unit (120) for detecting a human region representing a person from an image, a part detection unit (125) for detecting a part region representing a certain part of the person from the image or the human region, and a determination unit (140) for calculating an evaluation value representing a degree by which the person is taking a predetermined action, based on image information in the human region and image information in the part region, applying the evaluation value to a determination formula for determining an action of the person, and determining the predetermined action according to a result of application. The determination unit (140) changes the determination formula for determining the predetermined action according to a position of the human region in the image or a position of the part region in the image.

FIG.3

300

## Description

Technological Field

The present disclosure relates to an image processing technique, and more specifically to an image processing system, an image processing apparatus, an image processing method, and an image processing program for determining human actions.

Background

There exists an image processing technique for determining human actions from images. This image processing technique is applied to, for example, an image processing apparatus that monitors the action of a care receiver who needs care, such as an elderly person. The image processing apparatus detects that a care receiver takes an action involving a fall and notifies a caregiver of this. The caregiver thus can prevent the care receiver from, for example, a fall.

With respect to such an image processing apparatus, Japanese Laid-Open Patent Publication No. 2014-235669 (PTD 1) discloses a monitoring apparatus in which "a partial monitoring region can be set in accordance with the degree of monitoring and the partial monitoring region can be set easily at a desired position". Japanese Laid-Open Patent Publication No. 2014-149584 (PTD 2) discloses a notification system in which "a notification can be given not only by pressing a button but also in accordance with the motion of a target to be detected, and the monitoring person can check the state of a target to be detected through video".

Citation List

Patent Documents

     PTD 1: Japanese Laid-Open Patent Publication No. 2014-235669
     PTD 2: Japanese Laid-Open Patent Publication No. 2014-149584

Summary

Technical Problem

Even when a care receiver takes the same action, how the care receiver looks varies depending on the position in an image of the care receiver. Therefore, when the action is always determined through the same process, the accuracy of the action determination process may be reduced in some positions in the image of the care receiver.

The monitoring apparatus disclosed in PTD 1 captures an image of an elderly person with a camera unit and detects the position and height of the elderly person based on the obtained image. The monitoring apparatus determines actions such as getting out of bed and falling. Since the monitoring apparatus determines actions through the same process irrespective of the position of the elderly person in the image, the accuracy of action determination may be reduced in some positions in the image of the elderly person.

The notification system disclosed in PTD 2 accepts settings of upper and lower limit values indicating the size of a shape to be detected. When the size of the shape of a patient detected in the image falls within the set upper and lower limit values, the notification system notifies a nurse of, for example, the patient's fall. Since the notification system determines an action through the same process irrespective of the position of the patient in the image, the accuracy of action determination may be reduced in some positions of the patient in the image.

The present disclosure is made in order to solve the problem as described above. An object according to an aspect is to provide an image processing system that can prevent reduction of accuracy in determining an action depending on a position in the image of a care receiver. An object in another aspect is to provide an image processing apparatus that can prevent reduction of accuracy in determining an action depending on a position in the image of a care receiver. An object in yet another aspect is to provide an image processing method that can prevent reduction of accuracy in determining an action depending on a position in the image of a care receiver. An object in yet another aspect is to provide an image processing program that can prevent reduction of accuracy in determining an action depending on a position in the image of a care receiver.

Solution to Problem

According to an aspect, an image processing system capable of determining an action of a person is provided. The image processing system includes a human detection unit for detecting a human region representing the person from an image, a part detection unit for detecting a part region representing a certain part of the person from the image or the human region, and a determination unit for calculating an evaluation value representing a degree by which the person is taking a predetermined action, based on image information in the human region and image information in the part region, applying the evaluation value to a determination formula for determining an action of the person, and determining the predetermined action according to a result of application. The determination unit changes the determination formula for determining the predetermined action according to a position of the human region in the image or a position of the part region in the image.

Preferably, the image information in the human region includes at least one of a position of the human region in the image, a degree of change of the position, a size of the human region in the image, and a degree of change of the size. The image information in the part region includes at least one of a position of the part region in the image, a degree of change of the position, a size of the part region in the image, and a degree of change of the size.

Preferably, the evaluation value is calculated based on a relation between image information in the human region and image information in the part region.

Preferably, the image processing system further includes an exclusion unit for excluding the predetermined action from a result of action determination by the determination unit when the evaluation value satisfies a predetermined condition indicating that the person is not taking the predetermined action.

Preferably, the determination unit determines the predetermined action further using a shape of the human region in the image.

Preferably, the part to be detected includes head of the person.

Preferably, the action determined by the determination unit includes at least one of awakening, getting out of bed, falling off, lying on the bed, going to bed, and standing.

Preferably, the determination unit calculates an evaluation value representing a degree by which the person is taking a predetermined action by methods different from each other, integrates a plurality of the evaluation values with weights according to a position of the human region in the image or a position of the part region in the image, and determines the predetermined action according to a result of applying the integrated evaluation value to the determination formula.

According to another aspect, an image processing apparatus capable of determining an action of a person is provided. The image processing apparatus includes a human detection unit for detecting a human region representing the person from an image, a part detection unit for detecting a part region representing a certain part of the person from the image or the human region, and a determination unit for calculating an evaluation value representing a degree by which the person is taking a predetermined action, based on image information in the human region and image information in the part region, applying the evaluation value to a determination formula for determining an action of the person, and determining the predetermined action according to a result of application. The determination unit changes the determination formula for determining the predetermined action according to a position of the human region in the image or a position of the part region in the image.

According to yet another aspect, an image processing method capable of determining an action of a person is provided. The image processing method includes the steps of: detecting a human region representing the person from an image; detecting a part region representing a certain part of the person from the image or the human region; and calculating an evaluation value representing a degree by which the person is taking a predetermined action, based on image information in the human region and image information in the part region, applying the evaluation value to a determination formula for determining an action of the person, and determining the predetermined action according to a result of application. The step of determining includes the step of changing the determination formula for determining the predetermined action according to a position of the human region in the image or a position of the part region in the image.

According to yet another aspect, an image processing program capable of determining an action of a person is provided. The image processing program causes a computer to execute the steps of: detecting a human region representing the person from an image; detecting a part region representing a certain part of the person from the image or the human region; and calculating an evaluation value representing a degree by which the person is taking a predetermined action, based on image information in the human region and image information in the part region, applying the evaluation value to a determination formula for determining an action of the person, and determining the predetermined action according to a result of application. The step of determining includes the step of changing the determination formula for determining the predetermined action according to a position of the human region in the image or a position of the part region in the image.

Advantageous Effects of Invention

In an aspect, reduction of accuracy in determining an action depending on the position in an image of the care receiver can be prevented.

The foregoing and other objects, features, aspects, and advantages of the present invention will become more apparent from the detailed description below of the present invention understood in conjunction with the appended drawings.

Brief Description of the Drawings

Fig. 1 is a diagram showing an example of the configuration of an image processing system according to the present embodiment.
Fig. 2 is a diagram showing time-series images obtained by capturing a care receiver in motion.
Fig. 3 is a block diagram showing an example of the functional configuration of the image processing system.
Fig. 4 is a diagram showing a difference as to how the care receiver looks depending on the position in images.
Fig. 5 is a diagram showing feature amounts for use in an action determination process.

Fig. 6 is a diagram showing the relation between the kind of an action to be determined, the position of the human region in an image, and a state of change in human region when the care receiver is taking the action at the position.

Fig. 7 is a diagram showing the relation between the kind of an action to be determined, the position of the human region in an image, and a determination formula applied in the position.

Fig. 8 is a flowchart showing image processing executed by the image processing system.

Fig. 9 is a flowchart showing the action determination process.

Fig. 10 is a conceptual diagram conceptually showing a human detection process.

Fig. 11 is a flowchart showing a falling determination process.

Fig. 12 is a flowchart showing an awakening determination process.

Fig. 13 is a flowchart showing a getting out of bed determination process.

Fig. 14 is a diagram showing screen transition in the image processing system.

Fig. 15 is a diagram showing an example of the main screen.

Fig. 16 is a diagram showing an example of the setting mode top screen.

Fig. 17 is a diagram showing an example of the region setting screen.

Fig. 18 is a diagram showing an example of the normal screen.

Fig. 19 is a diagram showing an example of the notification issuance screen.

Fig. 20 is a block diagram showing a main hardware configuration of the image processing system.

Detailed Description of Embodiments

Embodiments of the present invention will be described below with reference to the drawings. In the following description, the same parts and components are denoted by the same reference signs. Their names and functions are also the same. Therefore, a detailed description thereof will not be repeated. The embodiments and modifications described below may be selectively combined as appropriate.

[Configuration of Image Processing System 300]

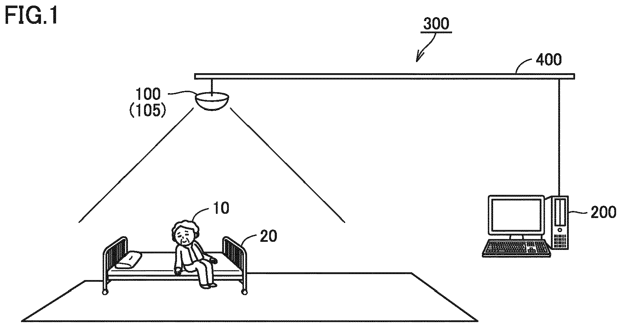

Referring to Fig. 1, the configuration of an image processing system 300 according to an embodiment will be described. Fig. 1 is a diagram showing an example of the configuration of image processing system 300.

Image processing system 300 is used, for example, for monitoring the action of a care receiver 10. As shown in Fig. 1, image processing system 300 includes an indoor terminal 100 serving as an image processing apparatus and a management server 200. Indoor terminal 100 and management server 200 are connected to each other through a network 400.

Indoor terminal 100 is installed in, for example, a medical facility, a nurse caring facility, or a house. Indoor terminal 100 includes a camera 105. Fig. 1 shows a state in which camera 105 captures an image of a care receiver 10 and a bed 20 from the ceiling. Indoor terminal 100 determines the action of care receiver 10 based on time-series images (video) obtained from camera 105. As an example, the action that can determined by indoor terminal 100 includes at least one of awakening, getting out of bed, falling off, lying on the bed, going to bed, and standing of care receiver 10. The action to be determined may include a posture indicating the state of the care receiver.

When detecting an action as a notification target (for example, awakening), the indoor terminal 100 transmits information indicating the kind of the action to management server 200. When awakening is detected as a notification target action, management server 200 notifies the caregiver that care receiver 10 has awaken. The caregiver thus can assist care receiver 10 to stand from bed 20 and can prevent falling, etc. that otherwise would occur when care receiver 10 awakens.

Although Fig. 1 shows an example in which image processing system 300 includes one indoor terminal 100, image processing system 300 may include a plurality of indoor terminals 100. Although Fig. 1 shows an example in which image processing system 300 includes one management server 200, image processing system 300 may include a plurality of management servers 200. Although indoor terminal 100 and management server 200 are configured as separate apparatuses in Fig. 1, indoor terminal 100 and management server 200 may be configured integrally.

Although Fig. 1 shows an example in which camera 105 is set on the ceiling, the installation place of camera 105 is not limited to the ceiling. Camera 105 is installed at any place overlooking care receiver 10. For example, camera 105 may be installed on a sidewall.

[Process Overview of Image Processing System 300]

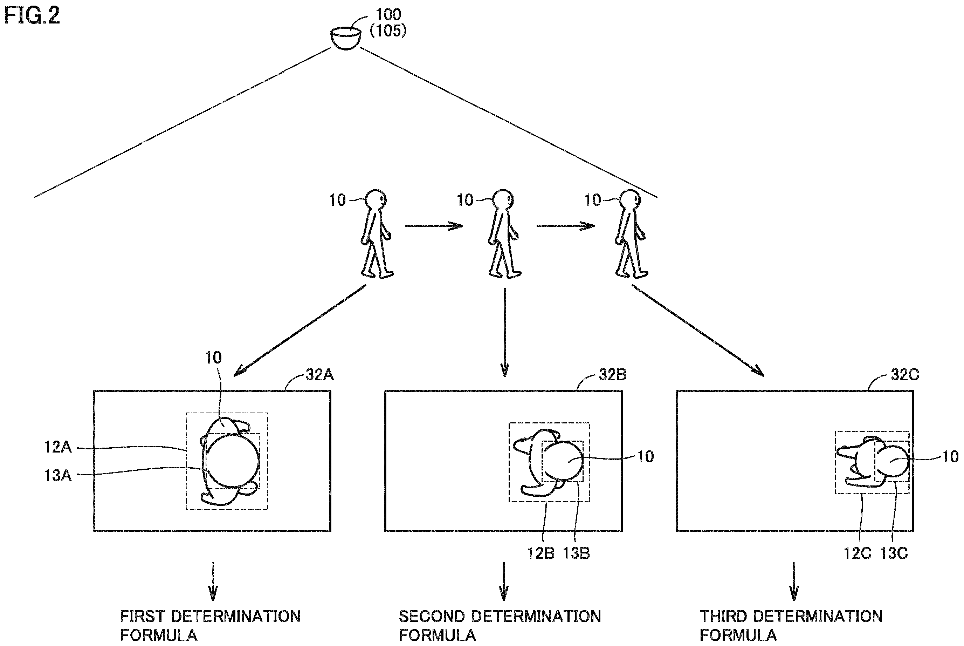

Referring to Fig. 2, an overview of the action determination process of image processing system 300 will be described. Fig. 2 shows time-series images 32A to 32C obtained by capturing the care receiver 10 in motion.

When care receiver 10 is immediately below camera 105, as shown in image 32A, care receiver 10 comes out in the center in the image. Image processing system 300 detects a human region 12A representing care receiver 10 from image 32A. Image processing system 300 also detects a part region 13A representing a certain part of care receiver 10 from image 32A or human region 12A. As an example, the part to be detected is the head of care receiver 10.

It is assumed that care receiver 10 goes away from the position immediately below camera 105. As a result, as shown in image 32B, how care receiver 10 looks changes. More specifically, the size of human region 12B is smaller than the size of human region 12A. The size of part region 13B is smaller than the size of part region 13A. Human region 12B moves to a position further away from the image center, compared with human region 12A. Part region 13B moves to a position further away from the image center, compared with part region 13A.

It is assumed that care receiver 10 further goes away from the position immediately below camera 105. As a result, as shown in image 32C, how care receiver 10 looks changes. More specifically, the size of human region 12C is smaller than the size of human region 12B. The size of part region 13C is smaller than the size of part region 13B. Human region 12C moves to a position further away from the image center, compared with human region 12B. Part region 13C moves to a position further away from the image center, compared with part region 13B.

Image processing system 300 according to the present embodiment changes a determination formula for determining the same action (for example, awakening), depending on the positions of human regions 12A to 12C in images or the positions of part regions 13A to 13C in images. As an example, image processing system 300 determines a predetermined action of care receiver 10 using a first determination formula for image 32A. Image processing system 300 determines the action of care receiver 10 using a second determination formula for image 32B. Image processing system 300 determines the action of care receiver 10 using a third determination formula for image 32C. Thus, image processing system 300 can accurately determine the action of care receiver 10 without depending on the position of care receiver 10 in the image.

Hereinafter, human regions 12A to 12C may be collectively referred to as human region 12. Part regions 13A to 13C may be collectively referred to as part region 13. Images 32A to 32C may be collectively referred to as image 32.

[Functional Configuration of Image Processing System 300]

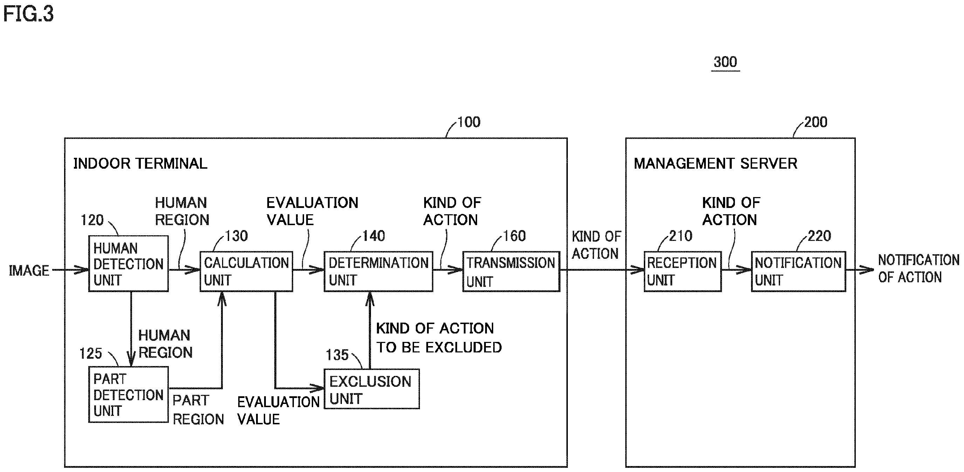

Referring to Fig. 3, the functions of image processing system 300 will be described. Fig. 3 is a block diagram showing an example of the functional configuration of image processing system 300. As shown in Fig. 3, image processing system 300 includes indoor terminal 100 and management server 200. In the following, the functions of indoor terminal 100 and management server 200 will be described in order.

(Functional Configuration of Indoor Terminal 100)

As shown in Fig. 3, indoor terminal 100 includes, as a functional configuration, a human detection unit 120, a part detection unit 125, a calculation unit 130, an exclusion unit 135, a determination unit 140, and a transmission unit 160.

Human detection unit 120 executes a human detection process for the images successively output from camera 105 (see Fig. 2) to detect a human region. As an example, the human region circumscribes a person included in an image and has a rectangular shape. The human region is indicated by, for example, coordinate values in the image. The details of the human detection process will be described later. Human detection unit 120 outputs the detected human region to part detection unit 125 and calculation unit 130.

Part detection unit 125 executes a part detection process for the human regions successively detected or the images successively output from camera 105 to detect a part region. As an example, the part region circumscribes the head included in the image and has a rectangular shape. The part region is indicated, for example, by coordinate values in the image. Part detection unit 125 outputs the detected part region to calculation unit 130.

Calculation unit 130 calculates an evaluation value representing the degree by which the care receiver is taking the action to be determined, based on image information in the human region and image information in the part region. As an example, the image information in the human region includes at least one of the position of the human region in the image, the degree of change of the position, the size of the human region in the image, and the degree of change of the size. The image information in the part region includes at least one of the position of the part region in the image, the degree of change of the position, the size of the part region in the image, and the degree of change of the size. The details of the method of calculating the evaluation value will be described later.

Exclusion unit 135 excludes a predetermined action from the result of action determination by determination unit 140 when the evaluation value satisfies a predetermined condition indicating that the care receiver is not taking the predetermined action. The details of exclusion unit 135 will be described later.

Determination unit 140 applies the evaluation value output by calculation unit 130 to a determination formula for action determination to determine a predetermined action of the care receiver according to the result of application. The details of the action determination method will be described later.

Transmission unit 160 transmits the kind of the action determined by determination unit 140 to management server 200.

(Functional Configuration of Management Server 200)

Referring now to Fig. 3, the functional configuration of management server 200 will be described. As shown in Fig. 3, management server 200 includes, as a functional configuration, a reception unit 210 and a notification unit 220.

Reception unit 210 receives the kind of the action determined by determination unit 140 from indoor terminal 100.

When reception unit 210 receives an action as a notification target, notification unit 220 notifies the caregiver that the action is detected. Examples of the action as a notification target include awakening, getting out of bed, falling off, lying on the bed, going to bed, standing, and other actions dangerous to the care receiver to be monitored. As examples of notification means, notification unit 220 displays information indicating the kind of action in the form of a message or outputs the information by voice. Alternatively, notification unit 220 displays information indicating the kind of action in the form of a message on the portable terminal (not shown) carried by the caregiver, outputs voice from the portable terminal, or vibrates the portable terminal.

[Action Determination Process]

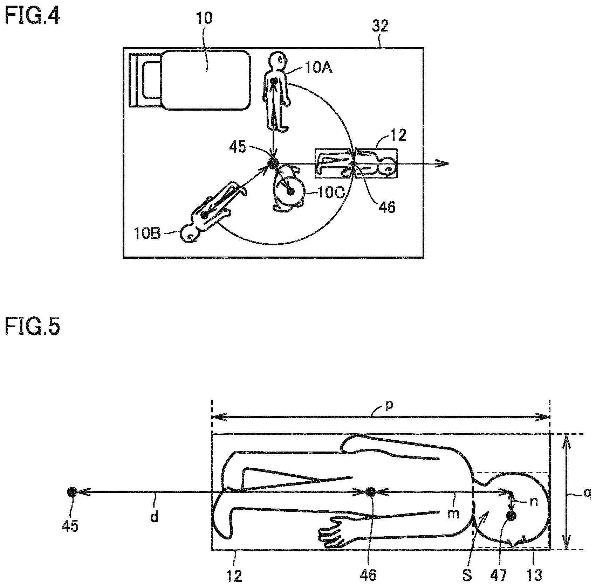

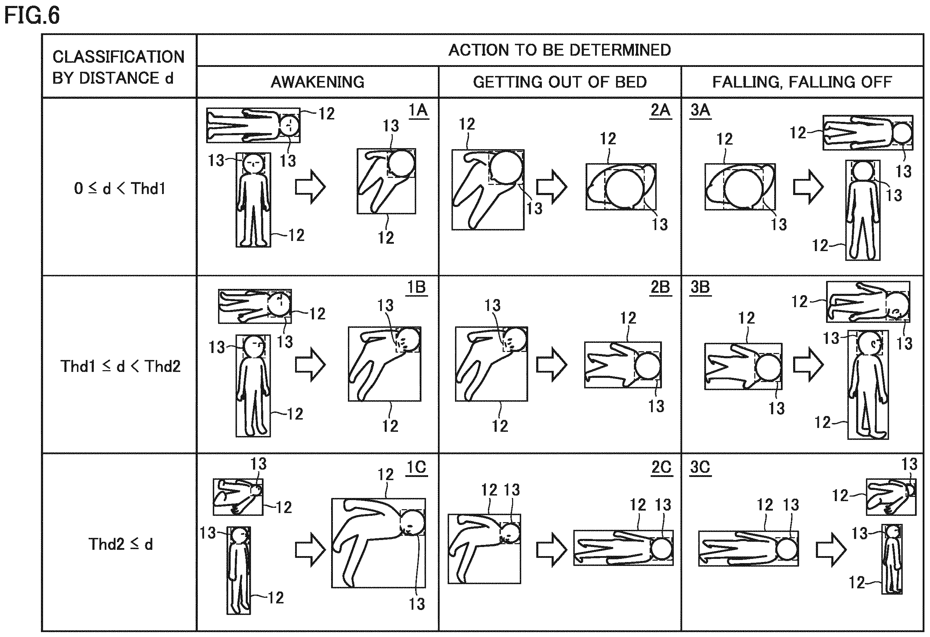

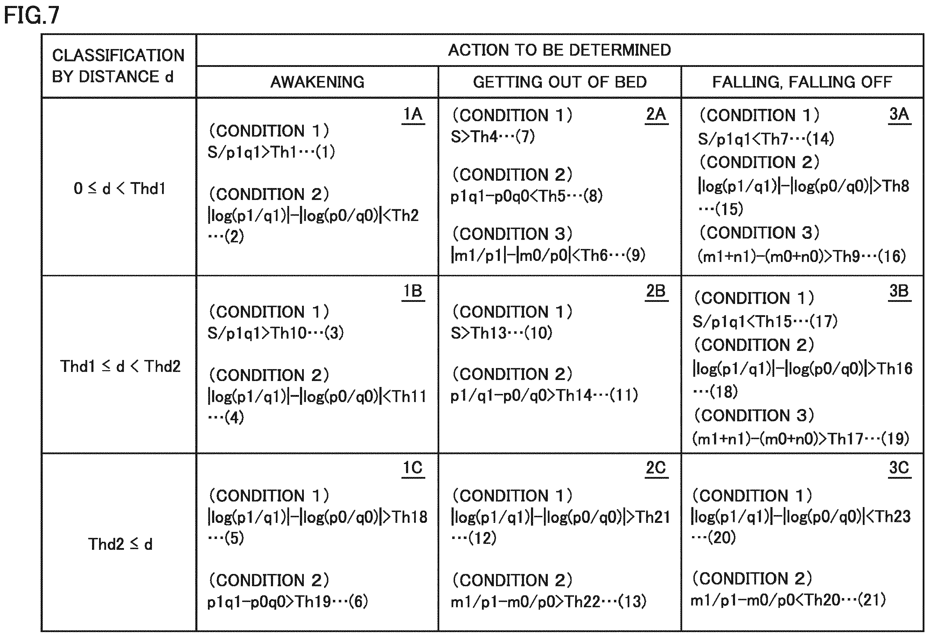

Referring to Fig. 4 to Fig. 7, the action determination process will be described. Fig. 4 shows the difference as to how the care receiver looks depending on the position in the image. Fig. 5 shows feature amounts for use in the action determination process. Fig. 6 shows the relation between the kind of action to be determined, the position of the human region in the image, and a state of change in human region when the care receiver takes the action at the position. Fig. 7 shows the relation between the kind of action to be determined, the position of the human region in the image, and the determination formula applied in the position.

Image processing system 300 rotates an image as pre-processing for the action determination process, extracts a feature amount from the rotated image, and executes the action determination process based on the extracted feature amount. Examples of the action to be determined include awakening, getting out of bed, and falling. In the following, the rotation correction process, the feature extraction process, the awakening determination process, the getting out of bed determination process, and the falling determination process will be described in order.

(Rotation Correction)

Referring to Fig. 4, the rotation correction executed as pre-processing for the action determination process will be described. As shown in Fig. 4, image processing system 300 rotates the human region so as to be oriented in a certain direction (for example, image longitudinal direction) with reference to the image center 45. Image processing system 300 can determine an action without depending on the direction of the human region in image 32 by executing the action determination process after executing the rotation correction process.

Image processing system 300 changes the action determination process depending on the distance from image center 45 to center 46 of human region 12 after rotation correction, which will be described in detail later. That is, image processing system 300 performs the action determination under the same determination condition for care receivers 10A, 10B at the same distance. Image processing system 300 performs the action determination under different determination conditions for care receivers 10A, 10C at different distances.

The rotation correction is not necessarily executed as pre-processing for the action determination process. For example, image processing system 300 may extract a part region first, rotate the entire image using the part region, and thereafter execute the remaining processing. Alternatively, image processing system 300 may rotate the image after extracting a human region and thereafter execute the remaining processing. Alternatively, image processing system 300 may perform inverse rotation correction of coordinate values without rotating the image and thereafter execute the remaining processing.

Although Fig. 4 shows an example in which rotation correction is performed with reference to center 46 of human region 12, rotation correction may be performed with reference to the centroid of human region 12 or the centroid of a partial region. Furthermore, image processing system 300 may change rotation correction according to system requirements such as processing speed and capacity, the determination conditions described later, and the like.

(Feature Amount)

As described above, image processing system 300 calculates an evaluation value representing the degree by which the care receiver is taking a target action, using image information in human region 12 and image information in part region 13, and determines the action according to the evaluation value. Referring to Fig. 5, image information (that is, feature amount) used for calculating the evaluation value will be described below.

The feature amount includes at least one of a distance d from image center 45 to the center of human region 12, a length p in the long-side direction of human region 12, a length q in the short-side direction of human region 12, a distance m from center 47 of part region 13 to image center 45 with respect to the long-side direction, a distance n from center 47 of part region 13 to image center 45 with respect to the short-side direction, and the size S of part region 13.

In the following description, when time-series two images are denoted as a preceding image and a current image, the feature amount in the preceding image is accompanied by a sign "0" and the feature amount in the current image is accompanied by a sign " 1". That is, distances d, m, n in the preceding image are denoted as "distances d0, m0, n0". Lengths p, q in the preceding image are denoted as "lengths p0, q0". Distances d, m, n in the current image are denoted as "distances d1, m1, n1". Lengths p, q in the current image are denoted as "lengths p1, q1".

The frame interval between the preceding image and the current image may be constant or may be changed depending on the kind of feature amount or the determination condition.

(Awakening Determination Process)

Image processing system 300 determines awakening of the care receiver, as an example. "Awakening" refers to the action after care receiver 10 wakes up on the bed until he/she stands up. Referring to Fig. 4 to Fig. 7, the method of determining awakening of the care receiver will be described below.

Image processing system 300 changes the determination formula to be applied to the awakening determination process, according to distance d from image center 45 to center 46 of human region 12. For example, when distance d is smaller than threshold Thd1, image processing system 300 selects category 1A. When all of the conditions shown in category 1A are satisfied, image processing system 300 detects awakening of the care receiver.

More specifically, as shown in Formula (1) in Fig. 7, image processing system 300 calculates the size of the head relative to human region 12 as an evaluation value for determining awakening and determines whether the ratio is larger than threshold Th1. When it is determined that the ratio is larger than threshold Th1, image processing system 300 determines that the size of the head relative to human region 12 is equal to or larger than a certain value.

As shown in Formula (2) in Fig. 7, image processing system 300 calculates the aspect ratio of human region 12 as an evaluation value for determining awakening and determines whether the degree of change of the aspect ratio is smaller than threshold Th2. When it is determined that the degree of change is smaller than threshold Th2, image processing system 300 determines that the aspect ratio of human region 12 is reduced.

When distance d is equal to or larger than threshold Thd1 and smaller than threshold Thd2, image processing system 300 selects the determination formulas in category 1B. When all of the conditions shown in category 1B are satisfied, image processing system 300 detects awakening of the care receiver.

More specifically, as shown in Formula (3) in Fig. 7, image processing system 300 calculates the ratio of the size of the head relative to the size of human region 12 as an evaluation value for determining awakening and determines whether the ratio is larger than threshold Th10. When it is determined that the ratio is larger than threshold Th10, image processing system 300 determines that the size of the head relative to human region 12 is equal to or larger than a certain value.

As shown in Formula (4) in Fig. 7, image processing system 300 calculates the aspect ratio of human region 12 as an evaluation value for determining awakening and determines whether the degree of change of the aspect ratio is smaller than threshold Th11. When it is determined that the degree of change is smaller than threshold Th11, image processing system 300 determines that the aspect ratio of human region 12 is reduced.

When distance d is larger than threshold Thd2, image processing system 300 selects the determination formulas in category 1C. When all of the conditions shown in category 1C are satisfied, image processing system 300 detects awakening of the care receiver.

More specifically, as shown in Formula (5) in Fig. 7, image processing system 300 calculates the aspect ratio of human region 12 as an evaluation value for determining awakening and determines whether the degree of change of the aspect ratio is larger than threshold Th18. When it is determined that the degree of change is larger than threshold Th18, image processing system 300 determines that the aspect ratio of human region 12 is increased.

As shown in Formula (6) in Fig. 7, image processing system 300 calculates the degree of change of the size of human region 12 as an evaluation value for determining awakening and determines whether the degree of change is larger than threshold Th19. When it is determined that the degree of change is larger than threshold Th19, image processing system 300 determines that the aspect ratio of human region 12 is increased.

(Getting out of Bed Determination Process)

Image processing system 300 determines getting out of bed of the care receiver, as an example. "Getting out of bed" refers to the action after care receiver 10 moves away from the bed (bedding). Referring to Fig. 4 to Fig. 7, the method of determining getting out of bed of the care receiver will be described below.

Image processing system 300 changes the determination formula to be applied to the awakening determination process, according to distance d from image center 45 to center 46 of human region 12. For example, when distance d is smaller than threshold Thd1, image processing system 300 selects category 2A. When all of the conditions shown in category 2A are satisfied, image processing system 300 detects getting out of bed of the care receiver.

More specifically, as shown in Formula (7) in Fig. 7, image processing system 300 sets the size S of the head as an evaluation value for determining getting out of bed and determines whether size S is larger than threshold Th4. When it is determined that size S is larger than threshold Th4, image processing system 300 determines that the head has a size equal to or larger than a certain value.

As shown in Formula (8) in Fig. 7, image processing system 300 calculates the degree of change of the size of human region 12 as an evaluation value for determining getting out of bed and determines whether the degree of change is smaller than threshold Th5. If it is determined that the degree of change is smaller than threshold Th5, image processing system 300 determines that the size of human region 12 is reduced.

As shown in Formula (9) in Fig. 7, image processing system 300 calculates the ratio of distance m relative to length p as an evaluation value for determining getting out of bed and determines whether the degree of change of the ratio is smaller than threshold Th6. If it is determined that the degree of change is smaller than threshold Th6, image processing system 300 determines that the position of the head changes closer to the center of the human region.

When distance d is equal to or larger than threshold Thdl and smaller than threshold Thd2, image processing system 300 selects the determination formulas in category 2B. When all of the conditions shown in category 2B are satisfied, image processing system 300 detects getting out of bed of the care receiver.

More specifically, as shown in Formula (10) in Fig. 7, image processing system 300 sets the size S of the head as an evaluation value for determining getting out of bed and determines whether size S is larger than threshold Th13. If it is determined that size S is larger than threshold Th13, image processing system 300 determines that the head has a size equal to or larger than a certain value.

As shown in Formula (11) in Fig. 7, image processing system 300 calculates the ratio of length p relative to length q as an evaluation value for determining getting out of bed and determines whether the degree of change of the ratio is larger than threshold Th14. When it is determined that the degree of change is larger than threshold Th14, image processing system 300 determines that the length in the long-side direction of human region 12 is increased.

When distance d is larger than threshold Thd2, image processing system 300 selects the determination formulas in category 2C. When all of the conditions shown in category 2C are satisfied, image processing system 300 detects getting out of bed of the care receiver.

More specifically, as shown in Formula (12) in Fig. 7, image processing system 300 calculates the ratio of length p relative to length q as an evaluation value for determining getting out of bed and determines whether the degree of change of the ratio is larger than threshold Th21. When it is determined that the degree of change is larger than threshold Th21, image processing system 300 determines that the length in the long-side direction of human region 12 is increased.

As shown in Formula (13) in Fig. 7, image processing system 300 calculates the ratio of distance m relative to length p as an evaluation value for determining getting out of bed and determines whether the degree of change of the ratio is larger than threshold Th22. When it is determined that the degree of change is larger than threshold Th22, image processing system 300 determines that the position of the head changes closer to the right side of the human region.

(Falling Determination Process)

Image processing system 300 determines falling of the care receiver, as an example. "Falling" refers to a state in which care receiver 10 is lying on the floor. It is noted that "falling" includes a state in which care receiver 10 changes from a standing state to a state of lying on the floor as well as a state of falling off the bed and lying on the floor (that is, falling off). Referring to Fig. 4 to Fig. 7, a method of determining falling of the care receiver will be described below.

Image processing system 300 changes the determination formula to be applied to the awakening determination process according to distance d from image center 45 to center 46 of human region 12. For example, when distance d is smaller than threshold Thd1, image processing system 300 selects category 3A. When all of the conditions shown in category 3A are satisfied, image processing system 300 detects falling of the care receiver.

More specifically, as shown in Formula (14) in Fig. 7, image processing system 300 calculates the ratio of the size S of the head relative to the size of human region 12 as an evaluation value for determining falling and determines whether the ratio is smaller than threshold Th7. When it is determined that the ratio is smaller than threshold Th7, image processing system 300 determines that the size of the head relative to human region 12 is smaller than a certain value.

As shown in Formula (15) in Fig. 7, image processing system 300 calculates the ratio of length p relative to length q and determines whether the degree of change of the ratio is larger than threshold Th8. When it is determined that the degree of change is larger than threshold Th8, image processing system 300 determines that the aspect ratio of the human region is increased.

As shown in Formula (16) in Fig. 7, image processing system 300 calculates the degree of change of distances m, n and determines whether the degree of change is larger than threshold Th9. When it is determined that the degree of change is larger than threshold Th9, image processing system 300 determines that the position of the head is at a distance from the center of the human region.

When distance d is equal to or larger than threshold Thdl and smaller than threshold Thd2, image processing system 300 selects the determination formulas in category 3B. When all of the conditions shown in category 3B are satisfied, image processing system 300 detects falling of the care receiver.

More specifically, as shown in Formula (17) in Fig. 7, image processing system 300 calculates the ratio of the size S of the head relative to the size of human region 12 as an evaluation value for determining falling and determines whether the ratio is smaller than threshold Th15. If it is determined that the ratio is smaller than threshold Th15, image processing system 300 determines that the size of the head relative to human region 12 is smaller than a certain value.

As shown in Formula (18) in Fig. 7, image processing system 300 calculates the ratio of length p relative to length q and determines whether the degree of change of the ratio is larger than threshold Th16. When it is determined that the degree of change is larger than threshold Th16, image processing system 300 determines that the aspect ratio of the human region is increased.

As shown in Formula (19) in Fig. 7, image processing system 300 calculates the degree of change of distances m, n and determines whether the degree of change is larger than threshold Th17. If it is determined that the degree of change is larger than threshold Th17, image processing system 300 determines that the position of the head is at a distance from the center of the human region.

When distance d is larger than threshold Thd2, image processing system 300 selects the determination formulas in category 3C. When all of the conditions shown in category 3C are satisfied, image processing system 300 detects falling of the care receiver.

More specifically, as shown in Formula (20) in Fig. 7, image processing system 300 calculates the ratio of length p relative to length q and determines whether the degree of change of the ratio is smaller than threshold Th23. When it is determined that the degree of change is smaller than threshold Th23, image processing system 300 determines that the aspect ratio of the human region is increased.

As shown in Formula (21) in Fig. 7, image processing system 300 calculates the ratio of distance m relative to length p as an evaluation value for determining falling and determines whether the degree of change of the ratio is smaller than threshold Th20. When it is determined that the degree of change is smaller than threshold Th20, image processing system 300 determines that the position of the head moves closer to the left side of the human region.

(First Modification)

Although two thresholds Thd1, Thd2 are shown in the example in Fig. 7, the number of thresholds (that is, the number of classification groups) may be increased. These thresholds may be preset considering accuracy, processing speed, robustness, angle of view, image size, and the kind of action to be detected of image processing system 300 all together. Image processing system 300 may change the determination conditions in a continuous manner according to distance d, rather than definitely classifying the determination conditions according to distance d.

(Second Modification)

In the example above, when all the determination formulas shown in the selected category are satisfied, the action associated with the category is detected. However, the action associated with the category may be detected when part of the determination formulas shown in the selected category are satisfied. Furthermore, part of the determination conditions in each category may be replaced or a new determination condition may be added to each category.

(Third Modification)

In the example above, image processing system 300 compares each evaluation value with the corresponding threshold. However, image processing system 300 may integrate the weighted evaluation values and compare the result of integration with a threshold to detect a predetermined action. For example, image processing system 300 calculates evaluation values VI, V2 using Formulas (A), (B) below, in place of Formulas (1), (2) shown in category 1A.

$$V1 = S/(p1 \times q1) - Th1 \ ... \ (A)$$

$$V2 = (|\log(p1/q1)| - |\log(p0/q0)|) - Th2 \ ... \ (B)$$

As shown in Formula (C) below, image processing system 300 multiplies evaluation values VI, V2 respectively by predetermined weights k1, k2 and sums up the results of multiplication to calculate a final evaluation value V. The weight is predetermined depending on the kind of action to be determined, the position of the human region, the position of the part region, and the like. That is, the weight is predetermined for each determination formula shown in each category in Fig. 7.

$$V = V1 \times k1 + V2 \times k2 \ ... \ (C)$$

As shown in a determination formula (D) below, when it is determined that evaluation value V is larger than threshold Thv, image processing system 300 detects awakening of the care receiver. Threshold Thv is predetermined based on experiments and the like.

$$V > Thv \ ... \ (D)$$

In this manner, in the present modification, image processing system 300 calculates the evaluation value representing the degree by which a person is taking a predetermined action, by methods different from each other, and integrates the evaluation values with weights according to the position of the human region or the part region. Image processing system 300 determines a predetermined action of the care receiver according to the result obtained by applying the integrated evaluation value to a predetermined determination formula. In this manner, each evaluation value is weighted whereby image processing system 300 can determine the action of the care receiver more accurately.

Image processing system 300 may not necessarily calculate evaluation value V by linearly combining evaluation values V1 and V2 as shown in Formula (C) above but may calculate evaluation value V by non-linearly combining evaluation values V1 and V2.

(Fourth Modification)

Although awakening, getting out of bed, and falling are illustrated as examples of the action to be determined in Fig. 7, other actions may be determined. For example, image processing system 300 determines the action such as lying on the bed which is the action opposite to awakening, going to bed which is the action opposite to getting out of bed, and standing which is the action opposite to falling. More specifically, image processing system 300 reverses the inequality signs in determination formulas (1) to (6) in Fig. 7 to detect lying on the bed of the care receiver. Image processing system 300 reverses the inequality signs in determination formulas (7) to (13) in Fig. 7 to detect going to bed of the care receiver. Image processing system 300 reverses the inequality signs in determination formulas (14) to (21) in Fig. 7 to detect standing of the care receiver.

In addition, image processing system 300 may detect the action "running". More specifically, image processing system 300 determines "running" by different methods depending on distance d from the image center to the human region. For example, when distance d is longer than a certain distance, image processing system 300 rotates the image after detecting two leg regions and compares the amount of movement of each leg region between frames with a predetermined threshold. When the amount of movement exceeds a predetermined threshold, image processing system 300 detects the action "running". When distance d is shorter than a certain distance, the amount of movement of the human region between frames is compared with a predetermined threshold. When the amount of movement exceeds a predetermined threshold, image processing system 300 detects the action "running".

(Fifth Modification)

The feature amount includes the positional relation between the human region and the partial region. For example, the feature amount includes the position of the head relative to the human region. In this case, the evaluation value is calculated based on the relation between image information in the human region and image information in the part region.

The feature amount for use in the action determination process is not limited to the example above. For example, the feature amount may include the motion of the human region and the motion of the partial region. In addition, the feature amount may include the shape of the human region, change in shape of the human region, the shape of the partial region, and change in shape of the partial region. In this case, image processing system 300 performs the action determination process using the shape of the human region and/or the shape of the partial region in the image.

In addition, image processing system 300 may calculate as another feature amount the degree of elongation of the human region calculated by any other methods such as moment, for any given direction in the image of the care receiver. The feature amount may be added, deleted or corrected depending on the performance required, the kind or number of actions to be detected, etc.

(Sixth Modification)

In the cases described above, camera correction or distortion correction is not required for the sake of simplicity of explanation. However, image processing system 300 may perform camera correction or distortion correction as necessary.

(Seventh Modification)

Image processing system 300 may change the threshold in the following second determination formula according to the result of the first determination formula. For example, when determination formula (1) in Fig. 7 is satisfied, image processing system 300 multiplies the present threshold Th2 in determination formula (2) in Fig. 7 by 1.1 so that determination formula (2) is easily satisfied. On the other hand, when determination formula (1) is not satisfied, image processing system 300 multiplies the present threshold Th2 in determination formula (2) by 0.9 so that determination formula (2) is less easily satisfied. Image processing system 300 thus can improve the accuracy of the action determination process.

[Exclusion Process]

The exclusion process by exclusion unit 135 described above (see Fig. 3) will be described. As described above, when the evaluation value satisfies a predetermined condition indicating that the care receiver is not taking a predetermined action, exclusion unit 135 excludes the predetermined action from the action determination result. That is, no notification is given for the excluded result. Thus, errors in action detection are reduced.

In an aspect, when the direction of movement of the head is different from the direction of movement of the body, image processing system 300 does not give a notification that the action as a notification target is detected, even if it is detected. For example, image processing system 300 calculates the average vector of the optical flow of the head region and sets the direction of the average vector as the direction of movement of the head region. Image processing system 300 also calculates the average vector of optical flow of the body region and sets the direction of the average vector as the direction of movement of the body region. When the direction of movement of the head region differs from the direction of movement of the body region by 90 degrees or more, image processing system 300 does not give a notification that the action to be determined is detected, even if it is detected.

In another aspect, image processing system 300 executes the exclusion process for the falling determination process by the following method. When the direction of falling of the care receiver is away from the camera, the ratio of the size of the head region relative to the body region is reduced. On the other hand, when the direction of falling of the care receiver is closer to the camera, the ratio of the size of the head region relative to the body region is increased. If a contradictory result in this respect occurs, image processing system 300 does not give a notification of "falling" even when "falling" is detected.

For example, the exclusion process applied to the falling determination process when distance d is equal to or larger than threshold Thd2 will be described. In this case, image processing system 300 determines that a contradiction occurs when the center of the head region is closer to the right side with respect to the center of the human region and when the evaluation value (= $S/(p1 \times q1)$) indicating the ratio of the size of the head region relative to the human region is larger than threshold Th21. Alternatively, image processing system 300 determines that a contradiction occurs when the evaluation value (= $S/(p1 \times q1)$) is smaller than threshold Th21. When it is determined that a contradiction occurs, image processing system 300 does not give a notification of "falling".

[Control Structure of Image Processing System 300]

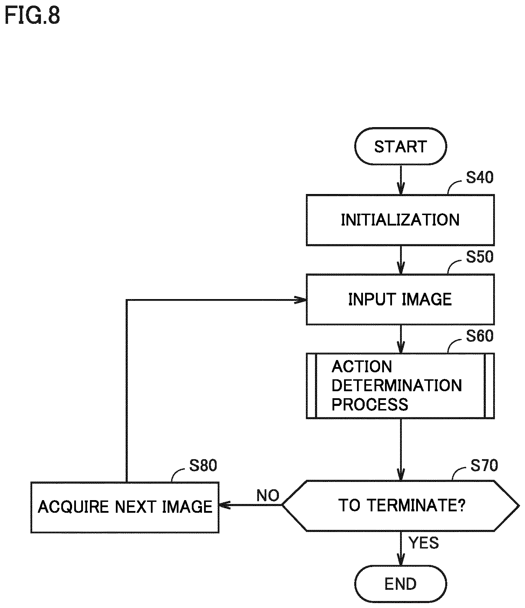

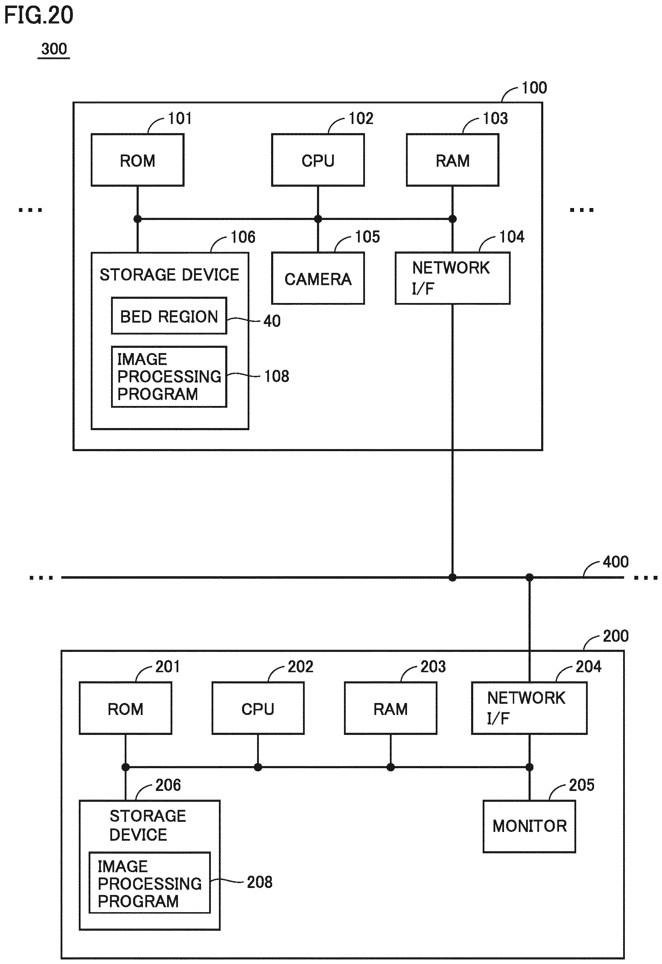

Referring to Fig. 8 to Fig. 12, the control structure of image processing system 300 will be described. Fig. 8 is a flowchart showing image processing executed by image processing system 300. The process in Fig. 8 is executed by CPU 102 (see Fig. 20) of indoor terminal 100 or CPU 202 (see Fig. 20) of management server 200. In another aspect, part or the whole of the process may be executed by circuit elements or other hardware.

In step S40, image processing system 300 performs initialization based on that an image processing program is executed.

In step S50, image processing system 300 inputs an image obtained by capturing a care receiver to be monitored to the image processing program according to the present embodiment.

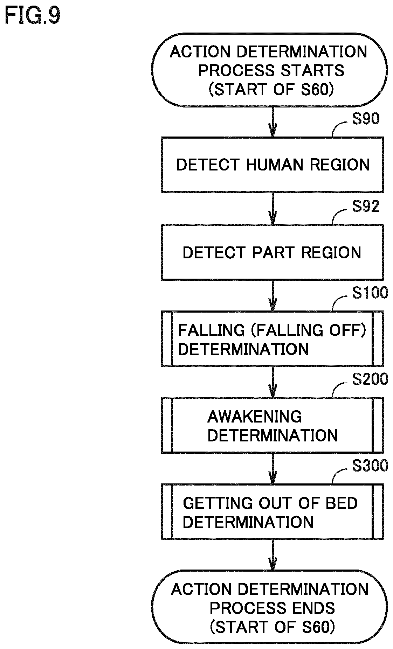

In step S60, image processing system 300 serves as determination unit 140 described above (see Fig. 3) to execute the action determination process. The flow of the action determination process will be described later (see Fig. 9).

In step S70, image processing system 300 determines whether to finish the image processing according to the present embodiment. For example, image processing system 300 determines to finish the image processing according to the present embodiment when an operation to interrupt the process is accepted from the administrator (YES in step S70). If not (NO in step S70), image processing system 300 switches the control to step S80.

In step S80, image processing system 300 acquires the next input image. Thus, image processing system 300 successively executes the image processing according to the present embodiment for time-series images (that is, video).

(Action Determination Process)

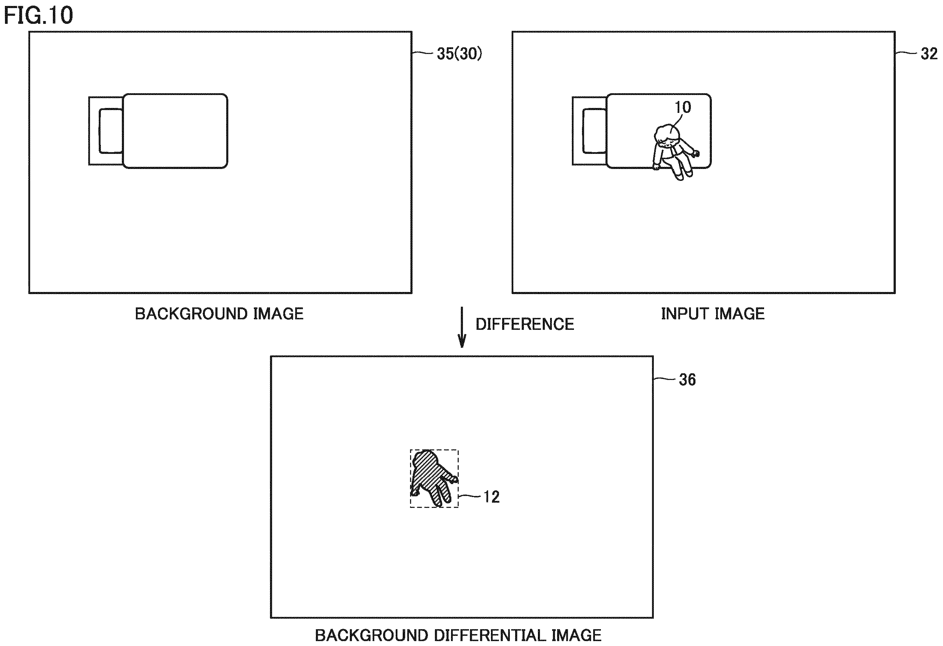

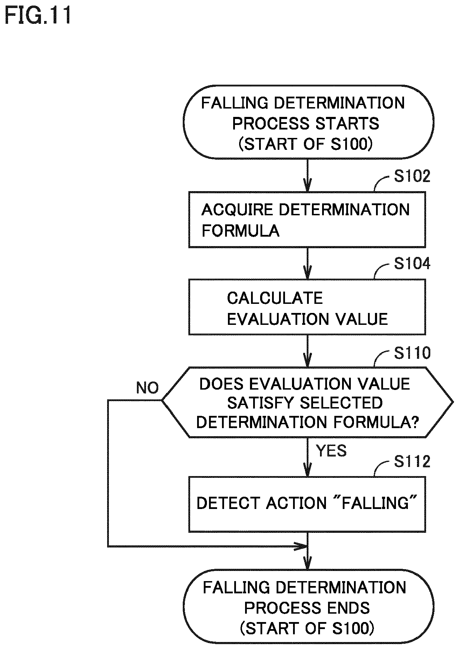

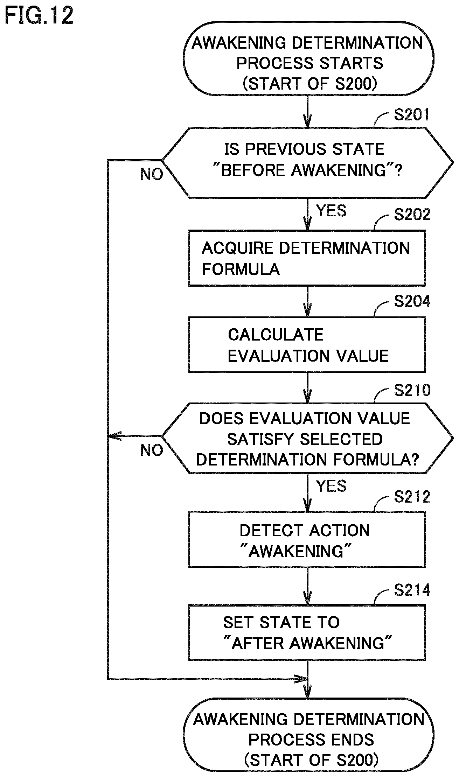

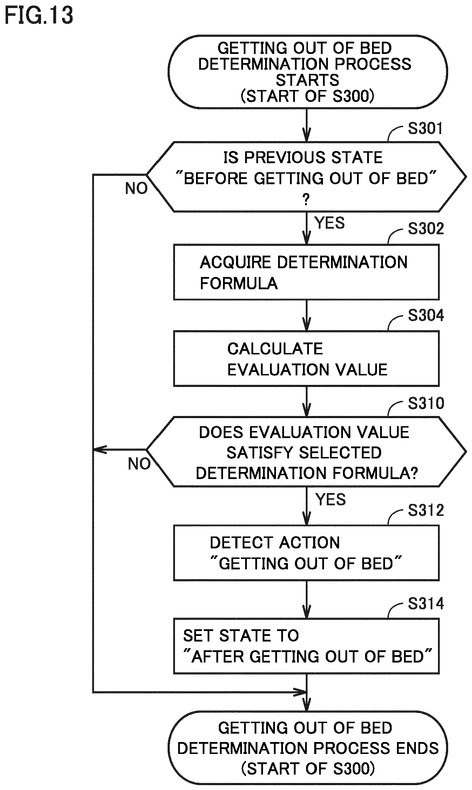

Referring to Fig. 9 to Fig. 13, the action determination process executed in step S60 in Fig. 8 will be described in detail. Fig. 9 is a flowchart showing the action determination process. Fig. 10 is a conceptual diagram conceptually showing the human detection process executed in step S90 in Fig. 9. Fig. 11 is a flowchart showing the falling determination process executed in step S100 in Fig. 9. Fig. 12 is a flowchart showing the awakening determination process executed in step S200 in Fig. 9. Fig. 13 is a flowchart showing the getting out of bed determination process executed in step S300 in Fig. 9.

In step S90, image processing system 300 serves as human detection unit 120 described above (see Fig. 3) to detect a human region from the input image. The human region is detected, for example, through background differential to obtain the difference between the input image and the background image or time differential to obtain the difference between sequential images captured at different times.

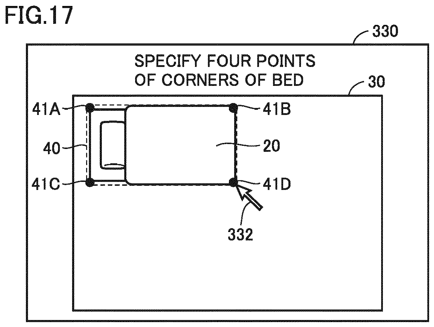

Fig. 10 shows a process of extracting human region 12 from image 32 through the background differential. More specifically, image processing system 300 acquires a background image 35 with no person, in advance. Background image 35 may be the same image as a setting image 30 described later (see Fig. 17) or may be an image obtained separately from setting image 30.

Image processing system 300 acquires image 32 from camera 105 (see Fig. 1) and then obtains the difference between image 32 and background image 35. Image processing system 300 thus can obtain a background differential image 36 in which the background is removed from image 32. Image processing system 300 extracts a region having a pixel value equal to or larger than a predetermined value from background differential image 36 and sets a rectangular region circumscribing the extracted region as human region 12.

Human region 12 may be extracted by a method different from the method shown in Fig. 10. For example, image processing system 300 prepares the characteristic portion (that is, feature amount) of care receiver 10 as a template and scans image 32 to search for a region similar to the template. If a region similar to the template is found in image 32, image processing system 300 sets the found region as human region 12. In addition, human region 12 may be extracted by any other image processing techniques such as optical flow and tracking.

Referring to Fig. 9 again, in step S92, image processing system 300 serves as part detection unit 125 described above (see Fig. 3) to detect a part region from human region 12. As an example, image processing system 300 detects the head as a part region. The head region may be detected by any method. As an example, image processing system 300 searches human region 12 for a circular shape and detects the found circular region as the head.

In step S100, image processing system 300 executes the falling determination process for determining whether the care receiver has fallen. Referring to Fig. 11, the falling determination process will be described.

In step S102, image processing system 300 selects one of categories 3A to 3C (see Fig. 7) associated with "falling" that is the action to be determined, based on the distance from the image center to the central point of the human region. Image processing system 300 acquires a determination formula included in the selected category.

In step S104, image processing system 300 serves as calculation unit 130 described above (see Fig. 3) to calculate an evaluation value to be applied to the acquired determination formula. The method of calculating the evaluation value is as described above and will not be further elaborated.

In step S110, image processing system 300 determines whether the calculated evaluation value satisfies the acquired determination formula. If it is determined that the evaluation value satisfies the acquired determination formula (YES in step S110), image processing system 300 switches the control to step S112. If not (NO in step S110), image processing system 300 terminates the falling determination process in step S100.

In step S112, image processing system 300 detects that the care receiver has fallen and notifies the caregiver of the falling of the care receiver.

Referring to Fig. 9 again, in step S200, image processing system 300 executes the awakening determination process for determining whether the care receiver has awoken. Referring to Fig. 12, the awakening determination process will be described.

In step S201, image processing system 300 determines whether the state of the care receiver shown by the result of the previous action determination process is "before awakening". If it is determined that the state is "before awakening" (YES in step S201), image processing system 300 switches the control to step S202. If not (NO in step S201), image processing system 300 terminates the awakening determination process in step S200.

In step S202, image processing system 300 selects one of categories 1A to 1C (see Fig. 7) associated with "awakening" that is the action to be determined, based on the distance from the image center to the central point of the human region. Image processing system 300 acquires a determination formula included in the selected category.

In step S204, image processing system 300 serves as calculation unit 130 described above (see Fig. 3) to calculate an evaluation value to be applied to the acquired determination formula. The method of calculating the evaluation value is as described above and will not be further elaborated.

In step S210, image processing system 300 determines whether the calculated evaluation value satisfies the acquired determination formula. If it is determined that the evaluation value satisfies the acquired determination formula (YES in step S210), image processing system 300 switches the control to step S212. If not (NO in step S210), image processing system 300 terminates the awakening determination process in step S200.

In step S212, image processing system 300 detects that the care receiver has awoken and notifies the caregiver of the awakening of the care receiver.

In step S214, image processing system 300 sets the current state of the care receiver to "after awakening".

Referring to Fig. 9 again, in step S300, image processing system 300 executes the getting out of bed determination process for determining whether the care receiver has gotten out of bed. Referring to Fig. 13, the getting out of bed determination process will be described.

In step S301, image processing system 300 determines whether the state of the care receiver indicated by the result of the previous action determination process is "before getting out of bed". If it is determined that the state is "before getting out of bed" (YES in step S301), image processing system 300 switches the control to step S302. If not (NO in step S301), image processing system 300 terminates the getting out of bed determination process in step S300.

In step S302, image processing system 300 selects one of categories 2A to 2C (see Fig. 7) associated with "getting out of bed" that is the action to be determined, based on the distance from the image center to the central point of the human region. Image processing system 300 acquires a determination formula included in the selected category.

In step S304, image processing system 300 serves as calculation unit 130 described above (see Fig.

3) to calculate an evaluation value to be applied to the acquired determination formula. The method of calculating the evaluation value is as described above and will not be further elaborated.

In step S310, image processing system 300 determines whether the calculated evaluation value satisfies the acquired determination formula. If it is determined that the evaluation value satisfies the acquired determination formula (YES in step S310), image processing system 300 switches the control to step S312. If not (NO in step S310), image processing system 300 terminates the getting out of bed determination process in step S300.

In step S312, image processing system 300 detects that the care receiver has gotten out of bed and notifies the caregiver of the getting out of bed of the care receiver.

In step S314, image processing system 300 sets the current state of the care receiver to "after getting out of bed".

[Screen Transition of Image Processing System 300]

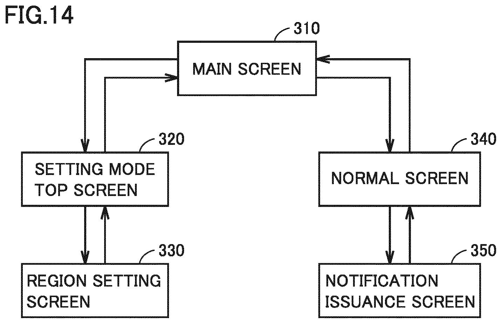

Referring to Fig. 14 to Fig. 19, exemplary screens appearing on image processing system 300 will be described. Fig. 14 is a diagram showing screen transition in image processing system 300.

When executing the image processing program according to the present embodiment, image processing system 300 displays a main screen 310 as an initial screen. The administrator can switch main screen 310 to a setting mode top screen 320 or a normal screen 340. The administrator can switch setting mode top screen 320 to main screen 310 or a region setting screen 330. The administrator can switch region setting screen 330 to setting mode top screen 320. The administrator can switch normal screen 340 to main screen 310 or a notification issuance screen 350. The administrator can switch notification issuance screen 350 to normal screen 340.

In the following, exemplary screens of main screen 310, setting mode top screen 320, region setting screen 330, normal screen 340, and notification issuance screen 350 will be described in order.

(Main Screen 310)

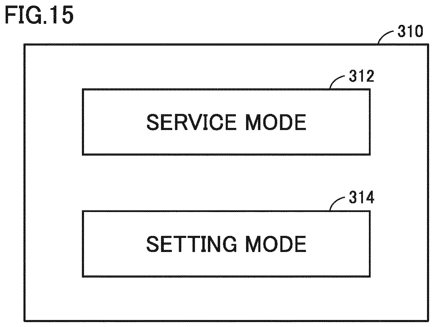

Fig. 15 shows an example of main screen 310. Image processing system 300 displays main screen 310 as an initial screen when executing the image processing program according to the present embodiment.

Main screen 310 includes a button 312 for accepting start of the action determination process and a button 314 for opening a setting screen related to the action determination process. Image processing system 300 displays normal screen 340 when detecting that button 312 is pressed. Image processing system 300 displays setting mode top screen 320 when detecting that button 314 is pressed.

(Setting Mode Top Screen 320)

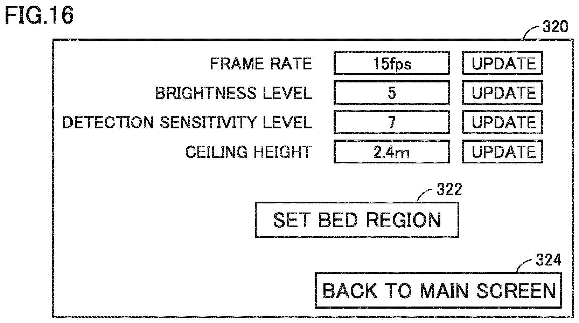

Fig. 16 shows an example of setting mode top screen 320. Setting mode top screen 320 is displayed at the time of initial setting or maintenance of image processing system 300.

Setting mode top screen 320 accepts the setting of a parameter related to the action determination process. For example, setting mode top screen 320 accepts a parameter related to the frame rate of camera 105 (see Fig. 1). Setting mode top screen 320 also accepts a parameter related to the brightness of an image output from camera 105. Setting mode top screen 320 further accepts a parameter related to the detection sensitivity for the action of a care receiver. Setting mode top screen 320 further accepts a parameter related to the height of the ceiling on which camera 105 is installed. When "Update" button in setting mode top screen 320 is pressed, the parameters are reflected in image processing system 300.

Image processing system 300 displays region setting screen 330 when detecting that a button 322 is pressed. Image processing system 300 displays main screen 310 when detecting that a button 324 is pressed.

Setting mode top screen 320 may accept input of other parameters. For example, setting mode top screen 320 may accept, as parameters related to camera 105, a parameter related to the contrast of the input image, a parameter related to zoom adjustment of the camera, and a parameter related to pan-tilt adjustment of the camera. In addition, setting mode top screen 320 may accept the compression ratio of an image to be transmitted to image processing system 300 from indoor terminal 100. In addition, setting mode top screen 320 may accept, for example, the setting of a time range in which the action such as awakening or going to bed is determined.

(Region Setting Screen 330)

Fig. 17 shows an example of region setting screen 330. Region setting screen 330 accepts the setting of a bed boundary 40 in a setting image 30. The set bed boundary 40 is used in the action determination process. As an example, image processing system 300 identifies awakening of the care receiver when the human region detected in the bed overlaps bed boundary 40.

Region setting screen 330 accepts, for example, the setting of points 41A to 41D to accept the setting of bed boundary 40. As an example, points 41A to 41D are input by a pointer 332 in conjunction with mouse operation. Image processing system 300 stores information (for example, coordinates) for specifying bed boundary 40 in setting image 30, based on that the operation of saving bed boundary 40 set by the administrator is accepted.

Although an example of setting points 41A to 41D is illustrated as a method of setting bed boundary 40 in Fig. 17, bed boundary 40 may be set by any other method. For example, region setting screen 330 may accept the setting of bed boundary 40 by accepting the setting of lines. As another method, region setting screen 330 accepts the setting of bed boundary 40 by accepting the setting of a plane. In this case, the administrator specifies the range in which bed 20 appears through drag operation on the region setting screen 330. In this way, any method that can specify part or the whole of the boundary between the bed region and the other region can be employed as a method of setting bed boundary 40.

Although an example of setting a rectangular boundary is illustrated as a method of setting bed boundary 40 in Fig. 17, bed boundary 40 may be set in any other shape. For example, bed boundary 40 may be set in other shapes such as circle, oval, and polygon (for example, hexagon). Alternatively, the shape of bed boundary 40 may be linear or arc. The line or arc may have a predetermined thickness.

Although an example of setting bed boundary 40 with pointer 332 is illustrated in Fig. 17, bed boundary 40 may be set through any other operation such as touch operation.

Although an example of setting bed boundary 40 for bed 20 is illustrated in Fig. 17, the target for which the boundary is set is not limited to bed. Examples of the target for which the boundary is set include bedding such linen, chair, and other objects used by the care receiver.

Although an example of setting bed boundary 40 manually by the administrator is illustrated in Fig. 17, image processing system 300 may automatically detect bed boundary 40 through image processing such as edge extraction and template matching. Alternatively, image processing system 300 may detect bed boundary 40 with a 3D sensor, a positional sensor attached to the foot of bed 20, a carpet having a pressure sensor, or any other sensors.

(Normal Screen 340)

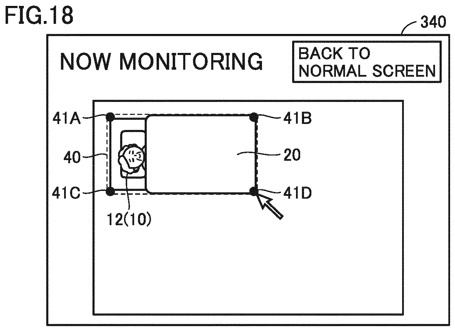

Fig. 18 shows an example of normal screen 340. Normal screen 340 is a screen displayed when care receiver 10 to be monitored is taking a not-dangerous action (for example, sleeping) during execution of the action determination process by image processing system 300. As an example, image processing system 300 displays images (video) obtained by capturing care receiver 10, as they are, as normal screen 340.

(Notification Issuance Screen 350)

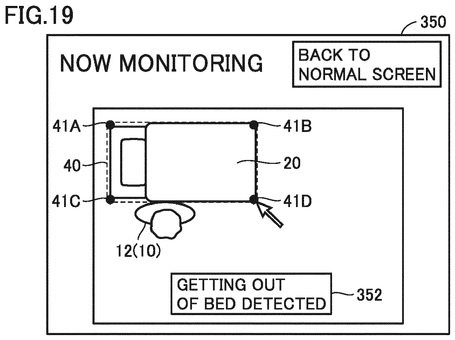

Fig. 19 shows an example of notification issuance screen 350. Notification issuance screen 350 is a screen displayed when care receiver 10 to be monitored takes a dangerous action during execution of the action determination process by image processing system 300. Image processing system 300 may ask the administrator whether to display notification issuance screen 350 before displaying notification issuance screen 350.

As shown in Fig. 19, image processing system 300 notifies the caregiver of the getting out of bed of care receiver 10, based on that care receiver 10 has gotten out of bed. In an aspect, image processing system 300 notifies the caregiver of the getting out of bed of care receiver 10 through a message 352. In another aspect, image processing system 300 notifies the caregiver of the getting out of bed of care receiver 10 through sound such as voice. In yet another aspect, image processing system 300 displays an image or video at the time of detection of getting out of bed of care receiver 10. Thus, in case image processing system 300 issues an error notification, the caregiver can confirm the action of care receiver 10 at the time of detecting action, through an image or video. This eliminates the need for rushing to care receiver 10.

The action as a notification target is not limited to getting out of bed. Examples of the action as a notification target include going to bed, awakening, and other actions involving danger to care receiver 10.

[Hardware Configuration of Image Processing System 300]

Referring to Fig. 20, an example of the hardware configuration of image processing system 300 will be described. Fig. 20 is a block diagram showing a main hardware configuration of image processing system 300. As shown in Fig. 20, image processing system 300 includes indoor terminal 100, management server 200, and network 400. Indoor terminal 100 and management server 200 are connected through network 400. In the following, the hardware configuration of indoor terminal 100 and the hardware configuration of management server 200 will be described in order.

(Hardware Configuration of Indoor Terminal 100)

As shown in Fig. 20, indoor terminal 100 includes a ROM (Read Only Memory) 101, a CPU 102, a RAM (Random Access Memory) 103, a network I/F (interface) 104, a camera 105, and a storage device 106.

ROM 101 stores, for example, an operating system and a control program executed in indoor terminal 100. CPU 102 executes the operating system and a variety of programs such as the control program of indoor terminal 100 to control the operation of indoor terminal 100. RAM 103 functions as a working memory to temporarily store a variety of data necessary for executing programs.

Network I/F 104 is connected with communication equipment such as antenna and an NIC (Network Interface Card). Indoor terminal 100 transmits/receives data to/from other communication terminals through the communication equipment. Other communication terminals include, for example, management server 200 and any other terminals. Indoor terminal 100 may be configured such that an image processing program 108 for implementing the processes according to the present embodiment can be downloaded through network 400.

Camera 105 is, for example, a monitoring camera or other imaging devices capable of capturing images of a subject. For example, camera 105 may be a sensor capable of acquiring non-visible images such as thermographic images as long as it can acquire indoor 2D images. Camera 105 may be configured separately from indoor terminal 100 or may be configured integrally with indoor terminal 100 as shown in Fig. 20.

Storage device 106 is, for example, a storage medium such as hard disk and external storage device. As an example, storage device 106 stores bed boundary 40 set for the setting image and image processing program 108 for implementing the processes according to the present embodiment. Bed boundary 40 is information for specifying a region in which a bed appears in the setting image or the input image. In addition, storage device 106 stores the relation between the kind of action to be determined, the position of the human region in the image, and the determination formula applied in the position (see Fig. 7).

Image processing program 108 may be a program built in any given program, rather than a single program. In this case, the process according to the present embodiment is implemented in cooperation with any given program. Such a program that does not include part of modules does not depart from the scope of image processing system 300 according to the present embodiment. Some or all of the functions provided by image processing program 108 according to the present embodiment may be implemented by dedicated hardware. Furthermore, management server 200 may be configured in the form of cloud service such that at least one server implements the process according to the present embodiment.

(Hardware Configuration of Management Server 200)

The hardware configuration of management server 200 will now be described. As shown in Fig. 20, management server 200 includes a ROM 201, a CPU 202, a RAM 203, a network I/F 204, a monitor 205, and a storage device 206.

ROM 201 stores an operating system and a control program executed in management server 200. CPU 202 executes the operating system and a variety of programs such as the control program of management server 200 to control the operation of management server 200. RAM 203 functions as a working memory and temporarily stores a variety of data necessary for executing the program.

Network I/F 204 is connected with communication equipment such as an antenna and an NIC. Management server 200 transmits/receives data to/from other communication terminals through the communication equipment. Other communication terminals include, for example, indoor terminal 100 and other terminals. Management server 200 may be configured such that a program for implementing the processes according to the present embodiment can be downloaded through network 400.

Monitor 205 displays a variety of screens displayed by executing an image processing program 208 according to the present embodiment. For example, monitor 205 displays screens such as main screen 310 (see Fig. 15), setting mode top screen 320 (see Fig. 16), region setting screen 330 (see Fig. 17), normal screen 340 (see Fig. 18), and notification issuance screen 350 (see Fig. 19). Monitor 205 may be implemented as a touch panel in combination with a touch sensor (not shown). The touch panel accepts, for example, the operation of setting bed boundary 40 and the operation of switching screens through touch operation.

Storage device 206 is, for example, a storage medium such as hard disk and external storage device. As an example, storage device 206 stores image processing program 208 for implementing the processes according to the present embodiment.

[Summary]

As described above, image processing system 300 changes determination formulas to be used in the action determination process, according to the position of the human region in the image or the position of the part region in the image. Thus, image processing system 300 can prevent reduction of accuracy in determining an action depending on the position in the image of the care receiver.

The embodiment disclosed here should be understood as being illustrative rather than being limitative in all respects. The scope of the present invention is shown not in the foregoing description but in the claims, and it is intended that all modifications that come within the meaning and range of equivalence to the claims are embraced here.

Reference Signs List

1A to 1C, 2A to 2C, 3A to 3C category, 10, 10A to 10C care receiver, 12, 12A to 12C human region, 13, 13A to 13C part region, 20 bed, 30 setting image, 32, 32A to 32C image, 35 background image, 36 background differential image, 40 bed boundary, 41A to 41D point, 45 image center, 46, 47 center, 100 indoor terminal, 101, 201 ROM, 102, 202 CPU, 103, 203 RAM, 104, 204 network I/F, 105 camera, 106, 206 storage device, 108, 208 image processing program, 120 human detection unit, 125 part detection unit, 130 calculation unit, 135 exclusion unit, 140 determination unit, 160 transmission unit, 200 management server, 205 monitor, 210 reception unit, 220 notification unit, 300 image processing system, 310 main screen, 312, 314, 322, 324 button, 320 setting mode top screen, 330 region setting screen, 332 pointer, 340 normal screen, 350 notification issuance screen, 352 message, 400 network.

**Claims**

1. An image processing system capable of determining an action of a person, comprising:

   a human detection unit for detecting a human region representing the person from an image;
   a part detection unit for detecting a part region representing a certain part of said person from said image or said human region; and
   a determination unit for calculating an evaluation value representing a degree by which said person is taking a predetermined action, based on image information in said human region and image information in said part region, applying said evaluation value to a determination formula for determining an action of said person, and determining said predetermined action according to a result of application,
   wherein said determination unit changes said determination formula for determining said predetermined action according to a position of said human region in said image or a position of said part region in said image.

2. The image processing system according to claim 1, wherein
   said image information in said human region includes at least one of a position of said human region in said image, a degree of change of said position, a size of said human region in said image, and a degree of change of said size, and
   said image information in said part region includes at least one of a position of said part region in said image, a degree of change of said position, a size of said part region in said image, and a degree of change of said size.

3. The image processing system according to claim 1 or 2, wherein said evaluation value is calculated based on a relation between image information in said human region and image information in said part region.

4. The image processing system according to any one of claims 1 to 3, wherein said image processing system further comprises an exclusion unit for excluding said predetermined action from a result of action determination by said determination unit when said evaluation value satisfies a predetermined condition indicating that said person is not taking said predetermined action.

5. The image processing system according to any one of claims 1 to 4, wherein said determination unit determines said predetermined action further using a shape of said human region in said image.

6. The image processing system according to any one of claims 1 to 5, wherein said part to be detected includes head of said person.

7. The image processing system according to any one of claims 1 to 6, wherein the action determined by said determination unit includes at least one of awakening, getting out of bed, falling off, lying on the bed, going to bed, and standing.

8. The image processing system according to any one of claims 1 to 7, wherein
   said determination unit
   calculates an evaluation value representing a degree by which said person is taking a predetermined action by methods different from each other,
   integrates a plurality of said evaluation values with weights according to a position of said human region in said image or a position of said part region in said image, and
   determines said predetermined action according to a result of applying said integrated evaluation value to said determination formula.

9. An image processing apparatus capable of determining an action of a person, comprising:

   a human detection unit for detecting a human region representing said person from an image;
   a part detection unit for detecting a part region representing a certain part of said person from said image or said human region; and
   a determination unit for calculating an evaluation value representing a degree by which said person is taking a predetermined action, based on image information in said human region and image information in said part region, applying said evaluation value to a determination formula for determining an action of said person, and determining said predetermined action according to a result of application,
   wherein said determination unit changes said determination formula for determining said predetermined action according to a position of said human region in said image or a position of said part region in said image.

10. An image processing method capable of determining an action of a person, comprising the steps of:

   detecting a human region representing said person from an image;
   detecting a part region representing a certain part of said person from said image or said human region; and

calculating an evaluation value representing a degree by which said person is taking a predetermined action, based on image information in said human region and image information in said part region, applying said evaluation value to a determination formula for determining an action of said person, and determining said predetermined action according to a result of application, wherein said step of determining includes the step of changing said determination formula for determining said predetermined action according to a position of said human region in said image or a position of said part region in said image.

11. An image processing program capable of determining an action of a person, said image processing program causing a computer to execute the steps of:

detecting a human region representing said person from an image;

detecting a part region representing a certain part of said person from said image or said human region; and

calculating an evaluation value representing a degree by which said person is taking a predetermined action, based on image information in said human region and image information in said part region, applying said evaluation value to a determination formula for determining an action of said person, and determining said predetermined action according to a result of application, wherein said step of determining includes the step of changing said determination formula for determining said predetermined action according to a position of said human region in said image or a position of said part region in said image.

FIG.1

FIG.2

100
(105)

10

10

10

10

32A

12A

13A

32B

10

12B  13B

32C

10

12C  13C

FIRST DETERMINATION
FORMULA

SECOND DETERMINATION
FORMULA

THIRD DETERMINATION
FORMULA

EP 3 309 748 A1

FIG.3

FIG.4

FIG.5

# FIG.6

| CLASSIFICATION BY DISTANCE d | ACTION TO BE DETERMINED | | |
|---|---|---|---|
| | AWAKENING | GETTING OUT OF BED | FALLING, FALLING OFF |
| $0 \leq d < Thd1$ | 1A | 2A | 3A |
| $Thd1 \leq d < Thd2$ | 1B | 2B | 3B |
| $Thd2 \leq d$ | 1C | 2C | 3C |

EP 3 309 748 A1

# FIG.7

| CLASSIFICATION BY DISTANCE d | ACTION TO BE DETERMINED | | |
|---|---|---|---|
| | AWAKENING | GETTING OUT OF BED | FALLING, FALLING OFF |
| $0 \leq d < Thd1$ | 1A<br>(CONDITION 1)<br>$S/p1q1 > Th1 \cdots (1)$<br><br>(CONDITION 2)<br>$\|\log(p1/q1)\| - \|\log(p0/q0)\| < Th2$<br>$\cdots (2)$ | 2A<br>(CONDITION 1)<br>$S > Th4 \cdots (7)$<br><br>(CONDITION 2)<br>$p1q1 - p0q0 < Th5 \cdots (8)$<br><br>(CONDITION 3)<br>$\|m1/p1\| - \|m0/p0\| < Th6 \cdots (9)$ | 3A<br>(CONDITION 1)<br>$S/p1q1 < Th7 \cdots (14)$<br>(CONDITION 2)<br>$\|\log(p1/q1)\| - \|\log(p0/q0)\| > Th8$<br>$\cdots (15)$<br>(CONDITION 3)<br>$(m1+n1) - (m0+n0) > Th9 \cdots (16)$ |
| $Thd1 \leq d < Thd2$ | 1B<br>(CONDITION 1)<br>$S/p1q1 > Th10 \cdots (3)$<br><br>(CONDITION 2)<br>$\|\log(p1/q1)\| - \|\log(p0/q0)\| < Th11$<br>$\cdots (4)$ | 2B<br>(CONDITION 1)<br>$S > Th13 \cdots (10)$<br><br>(CONDITION 2)<br>$p1/q1 - p0/q0 > Th14 \cdots (11)$ | 3B<br>(CONDITION 1)<br>$S/p1q1 < Th15 \cdots (17)$<br>(CONDITION 2)<br>$\|\log(p1/q1)\| - \|\log(p0/q0)\| > Th16$<br>$\cdots (18)$<br>(CONDITION 3)<br>$(m1+n1) - (m0+n0) > Th17 \cdots (19)$ |
| $Thd2 \leq d$ | 1C<br>(CONDITION 1)<br>$\|\log(p1/q1)\| - \|\log(p0/q0)\| > Th18$<br>$\cdots (5)$<br><br>(CONDITION 2)<br>$p1q1 - p0q0 > Th19 \cdots (6)$ | 2C<br>(CONDITION 1)<br>$\|\log(p1/q1)\| - \|\log(p0/q0)\| > Th21$<br>$\cdots (12)$<br><br>(CONDITION 2)<br>$m1/p1 - m0/p0 > Th22 \cdots (13)$ | 3C<br>(CONDITION 1)<br>$\|\log(p1/q1)\| - \|\log(p0/q0)\| < Th23$<br>$\cdots (20)$<br><br>(CONDITION 2)<br>$m1/p1 - m0/p0 < Th20 \cdots (21)$ |

EP 3 309 748 A1

FIG.8

```
                    ┌──────────┐
                    │  START   │
                    └────┬─────┘
                         │           ╭ S40
                         ▼
              ┌───────────────────────┐
              │    INITIALIZATION     │
              └──────────┬────────────┘
                         │           ╭ S50
                         ▼
              ┌───────────────────────┐
     ┌───────▶│     INPUT IMAGE       │
     │        └──────────┬────────────┘
     │                   │           ╭ S60
     │                   ▼
     │        ┌─╥───────────────────╥─┐
     │        │ ║ ACTION            ║ │
     │        │ ║ DETERMINATION     ║ │
     │        │ ║ PROCESS           ║ │
     │        └─╨───────────────────╨─┘
     │                   │
  ╭ S80                  ▼           ╭ S70
┌──────────────────┐  NO  ╱────────────────────╲
│ ACQUIRE NEXT     │◀─────│   TO TERMINATE?     │
│ IMAGE            │      ╲────────────────────╱
└──────────────────┘            │
                                │ YES
                                ▼
                          ┌──────────┐
                          │   END    │
                          └──────────┘
```

FIG.9

```
    ACTION DETERMINATION
       PROCESS STARTS
       (START OF S60)
              │
              │  ┌─ S90
              ▼
    ┌─────────────────────┐
    │ DETECT HUMAN REGION │
    └─────────────────────┘
              │
              │  ┌─ S92
              ▼
    ┌─────────────────────┐
    │  DETECT PART REGION │
    └─────────────────────┘
              │
              │  ┌─ S100
              ▼
    ┌─────────────────────┐
    │ FALLING (FALLING OFF)│
    │   DETERMINATION     │
    └─────────────────────┘
              │
              │  ┌─ S200
              ▼
    ┌─────────────────────┐
    │     AWAKENING       │
    │   DETERMINATION     │
    └─────────────────────┘
              │
              │  ┌─ S300
              ▼
    ┌─────────────────────┐
    │ GETTING OUT OF BED  │
    │   DETERMINATION     │
    └─────────────────────┘
              │
              ▼
    ACTION DETERMINATION
       PROCESS ENDS
       (START OF S60)
```

## FIG.10

BACKGROUND IMAGE — 35(30)

INPUT IMAGE — 32

DIFFERENCE

BACKGROUND DIFFERENTIAL IMAGE — 36

EP 3 309 748 A1

# FIG.11

```
    ┌─────────────────────────┐
    │  FALLING DETERMINATION  │
    │    PROCESS STARTS       │
    │   (START OF S100)       │
    └─────────────────────────┘
                │
                ▼           ┌ S102
    ┌─────────────────────────┐
    │ ACQUIRE DETERMINATION   │
    │ FORMULA                 │
    └─────────────────────────┘
                │
                ▼           ┌ S104
    ┌─────────────────────────┐
    │      CALCULATE          │
    │   EVALUATION VALUE      │
    └─────────────────────────┘
                │
                ▼           ┌ S110
         ╱───────────────────────╲
   NO   ╱  DOES EVALUATION VALUE   ╲
 ◄──────    SATISFY SELECTED
        ╲ DETERMINATION FORMULA?  ╱
         ╲───────────────────────╱
                │  YES
                ▼           ┌ S112
    ┌─────────────────────────┐
    │ DETECT ACTION "FALLING" │
    └─────────────────────────┘
                │
                ▼
    ┌─────────────────────────┐
    │  FALLING DETERMINATION  │
    │    PROCESS ENDS         │
    │   (START OF S100)       │
    └─────────────────────────┘
```

FIG.12

```
                    ┌─────────────────────────┐
                    │ AWAKENING DETERMINATION │
                    │     PROCESS STARTS      │
                    │     (START OF S200)     │
                    └─────────────────────────┘
                                 │
                                 │        ┌─ S201
                                 ▼
                    ╱─────────────────────────╲
          NO       ╱      IS PREVIOUS STATE     ╲
        ◄──────────      "BEFORE AWAKENING"?     │
                    ╲                            ╱
                     ╲──────────────────────────╱
                                 │  YES
                                 │        ┌─ S202
                                 ▼
                    ┌─────────────────────────┐
                    │  ACQUIRE DETERMINATION  │
                    │        FORMULA          │
                    └─────────────────────────┘
                                 │        ┌─ S204
                                 ▼
                    ┌─────────────────────────┐
                    │       CALCULATE         │
                    │    EVALUATION VALUE     │
                    └─────────────────────────┘
                                 │        ┌─ S210
                                 ▼
                    ╱─────────────────────────╲
                   ╱   DOES EVALUATION VALUE    ╲
          NO      │      SATISFY SELECTED        │
        ◄─────────  DETERMINATION FORMULA?      ╱
                    ╲──────────────────────────╱
                                 │  YES
                                 │        ┌─ S212
                                 ▼
                    ┌─────────────────────────┐
                    │     DETECT ACTION        │
                    │      "AWAKENING"         │
                    └─────────────────────────┘
                                 │        ┌─ S214
                                 ▼
                    ┌─────────────────────────┐
                    │      SET STATE TO        │
                    │   "AFTER AWAKENING"      │
                    └─────────────────────────┘
                                 │
                                 ▼
                    ┌─────────────────────────┐
                    │ AWAKENING DETERMINATION │
                    │      PROCESS ENDS       │
                    │     (START OF S200)     │
                    └─────────────────────────┘
```

# FIG.13

```
┌─────────────────────────────┐
│   GETTING OUT OF BED        │
│  DETERMINATION PROCESS      │
│        STARTS               │
│    (START OF S300)          │
└─────────────────────────────┘
              │
              ▼              S301
        ╱─────────────────────────╲
       ╱    IS PREVIOUS STATE       ╲
  NO  ╱  "BEFORE GETTING OUT OF BED" ╲
◄─────╲             ?                 ╱
       ╲───────────────────────────╱
              │ YES
              ▼              S302
┌─────────────────────────────┐
│   ACQUIRE DETERMINATION     │
│   FORMULA                   │
└─────────────────────────────┘
              │
              ▼              S304
┌─────────────────────────────┐
│   CALCULATE                 │
│   EVALUATION VALUE          │
└─────────────────────────────┘
              │
              ▼              S310
        ╱─────────────────────────╲
       ╱  DOES EVALUATION VALUE     ╲
  NO  ╱      SATISFY SELECTED        ╲
◄─────╲  DETERMINATION FORMULA?      ╱
       ╲───────────────────────────╱
              │ YES
              ▼              S312
┌─────────────────────────────┐
│   DETECT ACTION             │
│   "GETTING OUT OF BED"      │
└─────────────────────────────┘
              │
              ▼              S314
┌─────────────────────────────┐
│   SET STATE TO              │
│   "AFTER GETTING OUT OF BED"│
└─────────────────────────────┘
              │
              ▼
┌─────────────────────────────┐
│   GETTING OUT OF BED        │
│ DETERMINATION PROCESS ENDS  │
│    (START OF S300)          │
└─────────────────────────────┘
```

FIG.14

MAIN SCREEN — 310

SETTING MODE TOP SCREEN — 320

NORMAL SCREEN — 340

REGION SETTING SCREEN — 330

NOTIFICATION ISSUANCE SCREEN — 350

FIG.15

310

312

SERVICE MODE

314

SETTING MODE

FIG.16

320

| | | |
|---|---|---|
| FRAME RATE | 15fps | UPDATE |
| BRIGHTNESS LEVEL | 5 | UPDATE |
| DETECTION SENSITIVITY LEVEL | 7 | UPDATE |
| CEILING HEIGHT | 2.4m | UPDATE |

322

SET BED REGION

324

BACK TO MAIN SCREEN

FIG.17

SPECIFY FOUR POINTS
OF CORNERS OF BED

41A
41B
40
20
41C
41D
332
330
30

FIG.18

FIG.19

350

NOW MONITORING

BACK TO
NORMAL SCREEN

41A

41B

40

20

41C

41D

12(10)

GETTING OUT
OF BED DETECTED

352

# FIG.20

300

## INTERNATIONAL SEARCH REPORT

| International application No. |
| --- |
| PCT/JP2016/066856 |

**A. CLASSIFICATION OF SUBJECT MATTER**
*G06T7/20*(2006.01)i, *G08B25/00*(2006.01)i, *G08B25/04*(2006.01)i, *H04N7/18*(2006.01)i

According to International Patent Classification (IPC) or to both national classification and IPC

**B. FIELDS SEARCHED**

Minimum documentation searched (classification system followed by classification symbols)
G06T7/20, G08B25/00, G08B25/04, H04N7/18

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2013-73445 A (JVC Kenwood Corp.), 22 April 2013 (22.04.2013), paragraphs [0009] to [0037] (Family: none) | 1–11 |
| A | JP 2014-236896 A (NK Works Co., Ltd.), 18 December 2014 (18.12.2014), claims 1 to 15 & US 2014/0363089 A1 claims 1 to 15 & WO 2014/199941 A1 & CN 105283129 A | 1–11 |
| A | JP 2001-56853 A (Matsushita Electric Industrial Co., Ltd.), 27 February 2001 (27.02.2001), paragraphs [0002] to [0008] (Family: none) | 1–11 |

| ☐ Further documents are listed in the continuation of Box C. | ☐ See patent family annex. |
| --- | --- |

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 10 August 2016 (10.08.16) | 23 August 2016 (23.08.16) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (January 2015)

**EP 3 309 748 A1**

REFERENCES CITED IN THE DESCRIPTION

**Patent documents cited in the description**

- JP 2014235669 A

- JP 2014149584 A